# EUROPÄISCHE PATENTSCHRIFT

(11) **EP 1 876 129 B1**
(45) Veröffentlichungstag und Bekanntmachung des Hinweises auf die Patenterteilung: **09.03.2011**
(21) Anmeldenummer: 07109528.5
(22) Anmeldetag: 04.06.2007
(51) Int. Cl.: B66B 1/34, B66B 1/20

(54) **Verfahren und Vorrichtung zum Reduzieren des Energiekonsums einer Aufzugsanlage**
Method and device to reduce the energy consumption of an elevator.
Méthode et dispositif pour réduire la consommation d'énergie d'un ascenseur.

(30) Priorität: 12.06.2006 EP 06115311
(43) Veröffentlichungstag der Anmeldung: 09.01.2008
(73) Patentinhaber: Inventio AG, 6052 Hergiswil (CH)
(72) Erfinder: Lindeger, Urs, CH 6030, Ebikon (CH)

(56) Entgegenhaltungen:
- JP-A- 4 327 475
- JP-A- 2004 083 151
- JP-A- 2004 244 191
- JP-A- 2005 212 921
- JP-A- 2006 036 399

## Beschreibung

Die Erfindung betrifft ein Verfahren und eine Vorrichtung zum Reduzieren des Energiekonsums einer Aufzugsanlage nach den unabhängigen Ansprüchen.

Neuere Aufzugsanlagen lassen sich aus einem Operations-Modus in einen Stand-by-Modus, der gelegentlich auch als Schlaf-Modus bezeichnet wird, schalten, wenn die Aufzugsanlage während eines gewissen Zeitraumes nicht benutzt worden ist.

Der Energiekonsum einer Aufzugsanlage ist am höchsten, wenn sie sich im Operations-Modus und in einem Arbeitszustand befindet, das heisst, wenn eine Aufzugskabine nach einem Anforderungsruf eine Leerfahrt zu einer Ladestation oder eine Passagierfahrt ausführt.

Der Energiekonsum der Aufzugsanlage ist geringer, wenn sich die Aufzugsanlage zwar im Operations-Modus aber in einem Pausen-Zustand befindet. Befindet sich die Aufzugsanlage im Pausen-Zustand, so kann sie praktisch verzugsfrei in den Arbeits-Zustand gebracht werden.

Noch geringer ist der Energiekonsum, wenn sich die Aufzugsanlage im Stand-by-Modus befindet und somit gewissermassen schläft. Üblicherweise ist dann die Aufzugsanlage von ihrer hauptsächlichen Energiequelle, zum Beispiel dem Hausnetz, getrennt und je nach Ausführungsform mit einer Hilfsenergiequelle, zum Beispiel der Versorgung eines Bussystems, verbunden. Dabei kann das Bussystem als Biobus oder LON Bussystem realisiert werden. Im Stand-by-Modus werden im Wesentlichen nur Basisfunktionen aufrecht erhalten, um die notwendige Sicherheit zu gewährleisten und die Voraussetzung zu schaffen, dass die Aufzugsanlage in nützlicher Frist aus dem Stand-by-Modus in den Operations-Modus zurück versetzt werden kann. Wenn die Aufzugsanlage aus dem Stand-by-Modus geweckt und in den Operations-Modus gebracht werden soll, so erlangt sie den Operations-Modus im Allgemeinen erst nach einer gewissen Verzögerungszeit.

Ein grosser Teil der von einer Aufzugsanlage insgesamt konsumierten Energie, nämlich bis zu über 50%, entfällt auf die Zeiträume, in denen die Aufzugsanlage im Stand-by-Modus verharrt. Eine Reduktion des Energiekonsums während des Operations-Modus ist in der Regel nicht bedeutend. Während des Arbeits-Zustandes ist sie nur in beschränktem Masse realisierbar, da das Heben einer Last eine nicht reduzierbare Energie erfordert, selbst wenn alle Verluste, wie zum Beispiel auftretende Reibung, reduziert werden. Während des Pausen-Zustandes ist zwar der Energiekonsum geringer, lässt sich aber nicht beliebig weiter reduzieren, weil die Aufzugsanlage stets ohne Zeitverzug einsatzbereit sein muss.

Der Energiekonsum einer Aufzugsanlage kann also oft nur dann fühlbar reduziert werden, wenn es gelingt, den Energiekonsum im Stand-by-Modus beträchtlich zu senken, und zwar ohne dass dadurch der Zeitbedarf für den Wiedereintritt in den Operations-Modus auf ein nicht akzeptables Mass steigt. Wird dieser Zeitbedarf für das Aufwecken aus dem Stand-by-Modus gering gehalten, so können auch die Betriebs-Kriterien, in denen die Aufzugsanlage sich im Pausen-Zustand befindet, entsprechend verändert und dadurch die Aufzugsanlage länger im Stand-by-Modus gehalten werden, ohne dass die Benutzerfreundlichkeit im Bezug auf Wartezeiten nach einem Anforderungsruf der Aufzugskabine wesentlich verschlechtert wird.

Aus der JP-04 327 475-A ist eine Sicherheitsvorrichtung bekannt, mit welcher vermieden werden soll, dass zwecks Energieersparnis die Stromzufuhr aus einem Netz zu einer Aufzugsanlage unterbrochen wird, solange sich ein Passagier in der Aufzugskabine befindet. Die Sicherheitsvorrichtung umfasst eine Lampe, die nur dann in Betrieb ist, wenn sich ein Passagier in der Aufzugskabine befindet. Hierbei handelt es sich um eine Vorrichtung, die kein effizientes Management einer Aufzugsanlage erlaubt.

Aus JP 2004244191 ist eine Vorrichtung zur Kontrolle der Energieversorgung in einer Aufzugsanlage bekannt, welche über eine Notstrombatterie verfügt. Wenn der Aufzug für eine gewisse Zeit kontinuierlich angehalten ist, werden ein Kontaktor und eine Kommunikationskontrolleinheit von der Notstrombatterie angetrieben.

Die vorliegende Erfindung stellt sich die Aufgaben:
- ein verbessertes Verfahren zum Vermindern des Energiekonsums einer Aufzugsanlage vorzuschlagen, mit welchem eine beträchtliche Energieeinsparung realisierbar ist, und
- eine Vorrichtung zur Durchführung dieses Verfahrens zu schaffen, die auch zur Nachrüstung bestehender Aufzugsanlagen eingesetzt werden kann.

Die Lösung dieser Aufgaben erfolgt erfindungsgemäss für das Verfahren und die Vorrichtung gemäss der kennzeichnenden Merkmale der unabhängigen Ansprüche.

Vorteilhafte Weiterbildungen des erfindungsgemässen Verfahrens und der erfindungsgemässen Vorrichtung sind durch die jeweiligen abhängigen Ansprüche definiert.

Grundsätzlich werden die Ziele der Erfindung erreicht durch ein Management, das alle Belange im Zusammenhang mit dem Betrieb einer Aufzugsanlage berücksichtig, insbesondere Benutzerfreundlichkeit, Sicherheit, Ressourcenschonung. Dies kann erreicht werden, indem erstens der Energiekonsum im Stand-by-Modus gesenkt wird, zweitens die Zeit zwischen dem Beginn des Weckens aus dem Stand-by-Modus und dem Eintritt in den Operations-Modus klein gehalten wird (d.h. bei dem die Übergangs- oder "Aufweckzeit" kurz ist), und drittens Stand-by-Kriterien eingehalten werden, die sinnvoll die Gesamtzeit maximieren, welche die Aufzugsanlage im Stand-by-Modus verbringt.

Bei der Minimierung des gesamten Energiekonsums wird das Augenmerk auch darauf gerichtet, dass die zur Lösung der Aufgabe der Erfindung vorgeschlagene Vorrichtung (Stromsparmittel genannt) selbst nur wenig Energie erfordert, damit nicht ein beträchtlicher Teil der erzielten Einsparung von den zum Sparen eingesetzten Mitteln konsumiert wird.

Vorzugsweise sind die Stromsparmittel nach der Erfindung so konzipiert, dass sich damit bestehende Aufzugsanlagen nachrüsten lassen. Dies trägt, neben der Reduktion des Energiekonsums im Betrieb, weiter zur Schonung von Ressourcen bei, weil es eine vorzeitige Gesamterneuerung von Auszugsanlagen überflüssig macht.

Im Folgenden wird die Erfindung an Hand von Ausführungsbeispielen und mit Bezug auf die Zeichnung weiter erläutert. Es zeigen:
- Fig. 1: ein Beispiel des Energiekonsums einer Aufzugsanlage in Abhängigkeit von der Zeit, in vereinfachter graphischer Darstellung;
- Fig. 2: eine Aufzugsanlage mit einer Vorrichtung nach der Erfindung, in stark vereinfachter, schematisierter Darstellung;
- Fig. 3: ein Beispiel der Stromsparmittel zum Reduzieren des Energiekonsums einer Aufzugsanlage nach der Erfindung;
- Fig. 4A: eine erste Schnittstelle zur Verwendung mit einer Vorrichtung nach der Erfindung;
- Fig. 4B: eine zweite Schnittstelle zur Verwendung mit einer Vorrichtung nach der Erfindung;
- Fig. 5: ein Beispiel einer parallelen Schachtverkabelung für den Anschluss der Stromsparmittel nach der Erfindung;
- Fig. 6: ein Beispiel einer Kommunikation von Stromsparmitteln von benachbarten Aufzügen in einer Aufzugsgruppe.

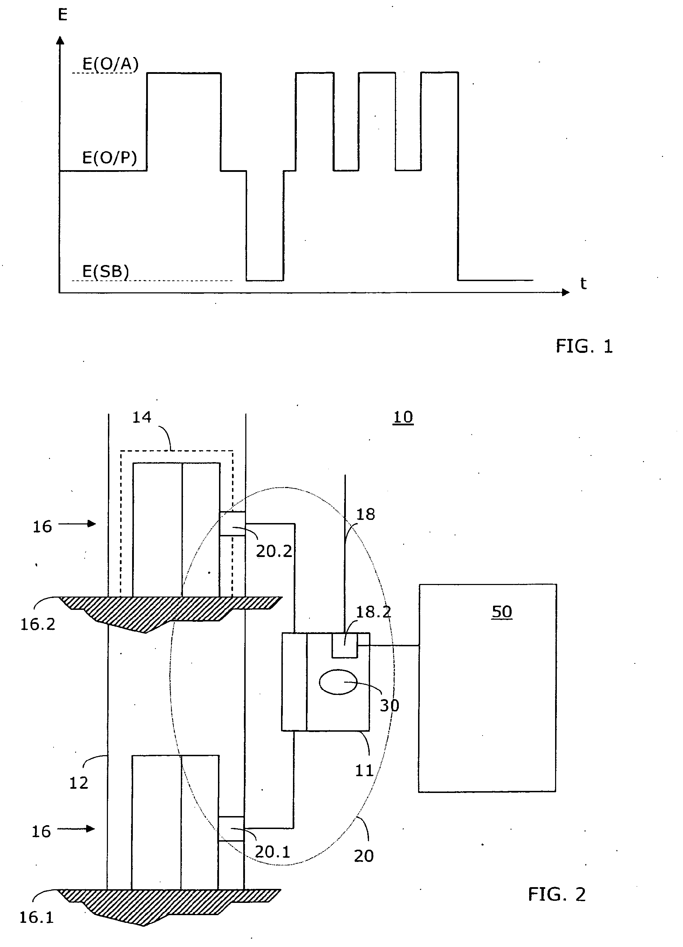

Fig. 1 zeigt in einer graphischen Darstellung ein Beispiel des Energiekonsums einer Aufzugsanlage in Abhängigkeit von der Zeit t. Der höchste Energiekonsum E(O/A) tritt auf, wenn sich die Aufzugsanlage im Operations-Modus und hierbei in einem Arbeits-Zustand befindet. Zur Vereinfachung wird nicht unterschieden zwischen dem Energiekonsum während eines Transportes und demjenigen einer Leerfahrt. Ein geringerer Energiekonsum E(O/P) tritt auf, wenn sich die Aufzugsanlage zwar im Operations-Modus, aber in einem Pausen-Zustand befindet. Der geringste Energiekonsum E(SB) tritt auf, wenn sich die Aufzugsanlage im Stand-by-Modus, auch Schlaf-Modus genannt, befindet. Die Aufzugsanlage konsumiert dann nur noch Energie zum Beispiel aus einer speziellen Energiequelle, wie zum Beispiel einem Akku oder einer Stromquelle eines Bussystems. Diese spezielle Energiequelle wird hier als Hilfsenergiequelle bezeichnet, die unabhängig ist von der Hauptenergiequelle. Als Hauptenergiequelle dient üblicherweise ein Generator oder das Stromnetz im Gebäude wo sich die Aufzugsanlage befindet.

Noch geringer, nämlich Null, wäre der Energiekonsum natürlich, wenn die Aufzugsanlage vollständig stillgelegt und somit auch von der Hilfsenergiequelle getrennt würde.

Die Durchführung des Verfahrens nach der Erfindung erfolgt gemäss eines Managementkonzepts, zu dessen Realisierung ein Mikroprozessor eingesetzt wird. D.h., die Vorgänge respektive Abläufe sind mikroprozessorgesteuert. Das Managementkonzept, gemäss dem die angestrebte Reduktion des Energiekonsums ermöglicht wird, umfasst vorzugsweise die folgenden Möglichkeiten:

Die Aufzugsanlage ist im Operations-Modus und im Arbeits-Zustand wenn ein Benutzungs-Kriterium, erfüllt ist, dass heisst, wenn sich ein Passagier in der Aufzugskabine befindet oder ein Transport in nächster Zeit durchgeführt oder erwartet wird, insbesondere wenn
- die Aufzugskabine einen Transport ausführt;
- die Aufzugskabine mit einem Passagier in einer Station ist und kein Fahrbefehl gegeben wird;
- die Aufzugskabine leer nach einem Aufruf zu einer Station fährt, wobei dies aus dem Pausen-Zustand oder aus dem Stand-by-Modus erfolgen kann;
- die Aufzugskabine leer ohne Aufruf zu derjenigen Station fährt, welche die vermutlich nächste anzufahrende Station ist, wobei dies aus dem Pausen-Zustand oder aus dem Stand-by-Modus erfolgen kann.

Die Aufzugsanlage ist im Operations-Modus und Pausen-Zustand, wenn das Benutzungs-Kriterium nicht erfüllt ist und auch Stand-by-Kriterien nicht erfüllt sind, mit anderen Worten, wenn eine baldige Benutzung zu erwarten ist, somit also insbesondere wenn
- kein Passagier in der Aufzugskabine ist;
- kein Passagier vor kurzem in der Aufzugskabine war;
- kein Aufruf zur Fahrt der leeren Aufzugskabine an eine Station erfolgt ist;
- ein Transport oder Aufruf in naher Zukunft erwartet wird.

Die Aufzugsanlage ist im Stand-by-Modus, wenn das Benutzungs-Kriterium nicht erfüllt ist und die Stand-by-Kriterien erfüllt sind, das heisst wenn
- kein Passagier in der Aufzugskabine ist;
- kein Passagier vor kurzem in der Aufzugskabine war;
- kein Aufruf zur Fahrt der leeren Aufzugskabine an eine Station erfolgt ist;
- kein Transport oder Aufruf in naher Zukunft erwartet wird.

Bezüglich des Benutzungs-Kriterium ist festzuhalten, dass die Aufzugsanlage grundsätzlich nicht in den Stand-by-Modus gebracht werden soll, solange das Benutzungs-Kriterium erfüllt ist, mindestens jedoch solange wie sich ein Passagier in einer Aufzugskabine befindet, und zwar unabhängig davon, ob die Stand-by-Kriterien erfüllt sind. D.h., die Benutzungs-Kriterien haben stets Vorrang im Sinne von Priorität gegenüber den Stand-by-Kriterien.

Stand-by-Kriterien können in verschiedener Weise festgelegt werden, um die Aufzugsanlage bedarfsgerecht in den Stand-by-Modus oder den Operations-Modus zu bringen und dort zu halten.

Beispielsweise können mit Hilfe einer Schaltuhr Zeitspannen festgelegt werden, in denen grundsätzlich der Stand-by-Modus oder der Operations-Modus herrschen soll, je nach Tageszeit oder Wochentag. Beispielsweise ist es in Bürogebäuden sinnvoll, während der Zeitbereiche des Arbeitsbeginnes und des Arbeitsendes die Aufzugsanlage im Operations-Modus zu halten, auch dann, wenn ausnahmsweise während einer gewissen Zeitspanne keine Aufzugskabine benutzt wird, weil mit Sicherheit in naher Zukunft wieder eine Aufzugskabine angefordert werden wird. Umgekehrt ist es nicht sinnvoll, die Aufzugsanlage mitten in der Nacht im Operations-Modus zu halten, auch wenn ausnahmsweise eine Aufzugskabine für eine einzelne Fahrt benutzt wird, da mit sehr grosser Wahrscheinlichkeit erst sehr viel später wieder weitere Fahrten durchgeführt werden. Stand-by-Kriterien können aber auch durch externe Mittel vorgegeben bzw. verändert werden.

Es ist ein Notstromspeicher mit elektrischer Energie vorgesehen, der die Aufzugsanlage bei Ausfall der Hauptenergiequelle mit elektrischem Strom notversorgt. In der Regel wird der Notstromspeicher so ausgelegt, dass die elektrische Energie ausreicht, um die Aufzugsanlage in einen sicheren Zustand zu überführen und Kabinenfunktionen, wie Licht, Alarm oder Telekommunikation, typischerweise bis zu 60 Minuten zu betreiben. Üblicherweise wird der Notstromspeicher von der Hauptenergiequelle geladen. Ist eine Aufzugsanlage längere Zeit im Stand-by-Modus und damit weitgehend abgeschaltet (von der Hauptenergiequelle getrennt), so kann es vorkommen, dass sich Notstromspeicher ihrer Notstromversorgung tiefentladen und so einen Defekt erleiden. Um dies zu verhindern, ist es vorteilhaft, wenn die Aufzugsanlage in einen Lade-Modus versetzt werden kann, in dem teilweise oder ganz entladene Notstromspeicher wieder mit elektrischer Energie aufgeladen werden. Die Aufzugsanlage kann beispielsweise mittels einer Schaltuhr in bestimmten Zeitabständen oder auf Grund einer Überwachung des Zustandes der genannten Notstromspeicher in den Lade-Modus versetzt werden. Dies ist ein optionales Merkmal der Stromsparmittel. Der Notstromspeicher kann beispielsweise als Akkumulator, Batterie oder Kondensator realisiert sein.

Fig. 2 zeigt ein Ausführungsbeispiel einer Aufzugsanlage 10 mit einer Vorrichtung 11 (z.B. in Form eines Stromsparmittels) gemäss Erfindung.

Die in Fig. 2 gezeigte Aufzugsanlage 10 weist einen Aufzugsschacht 12 auf, in dem sich eine Aufzugskabine 14 auf- und abwärts bewegen kann. Es sind mehrere Stationen 16 vorgesehen, die im Allgemeinen auf der Höhe von Etagen 16.1, 16.2 eines Gebäudes liegen, in welchem sich die Aufzugsanlage 10 befindet. Der Aufzugsschacht 12 weist eine Verkabelung 18 auf, über welche die Aufzugsanlage 10 mit ihrer in Fig. 2 nicht dargestellten (Haupt- )Energiequelle verbunden ist. Diese Energiequelle ist spezifisch für die Aufzugsanlage 10 vorgesehen und liefert im Wesentlichen die von der Aufzugsanlage 10 im Operations-Modus konsumierte Energie. Im Weiteren zeigt Fig. 2 eine Einrichtung 20 (auch Hausinstallation genannt) zum Rufen der Aufzugsanlage 10. Diese Einrichtung 20 kann über eine nicht gezeigte Hilfsenergiequelle gespeist sein. Diese Hilfsenergiequelle kann so ausgelegt sein, dass sie im Wesentlichen die von der Hausinstallation im Stand-by-Modus konsumierte Energie, einschliesslich der Energie zum Aufwecken der Aufzugsanlage 10 aus dem Stand-by-Modus bereit stellt. Das heisst, es können trotz Trennung der Aufzugsanlage von der Hauptversorgung Anforderungsrufe abgesetzt werden, die dazu führen, dass die Aufzugsanlage durch die Stromsparmittel 11 "aufgeweckt" werden.

Auf den einzelnen Etagen 16.1, 16.2 sind kleine Tableaux 20.1, 20.2 mit Betätigungselementen, wie z.B. Rufknöpfen oder Ruftasten, vorhanden, mit deren Hilfe die Aufzugskabine 14 angefordert, das heisst zur entsprechenden Etage bestellt oder vorbestellt werden kann. Diese Tableaux 20.1, 20.2 sind Teil der Hausinstallation 20. Mindestens wenn die Aufzugsanlage 10 im Stand-by-Modus ist, meist aber generell, erfolgt die Energieversorgung der Hausinstallation 20 durch die Hilfsenergiequelle. In den Stromsparmitteln 11 ist mittels eines Mikroprozessors 30 ein Managementkonzept implementiert, das die Koordination der Funktionen vornimmt, wobei insbesondere die Einhaltung der verschiedenen Kriterien beurteilt wird, gemäss welchen der Operations-Modus bzw. der Stand-by-Modus einzuhalten ist.

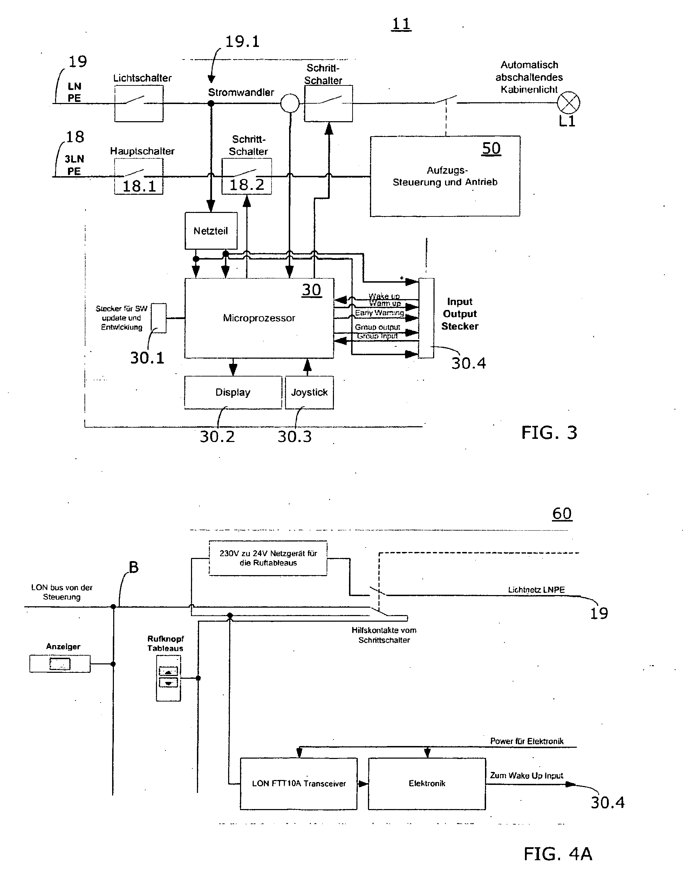

Fig. 3 zeigt ein Beispiel eines Stromsparmittels 11 nach der Erfindung und ist im Wesentlichen selbsterklärend. In dem gezeigten Beispiel ist die Stromversorgung für die Kabinenbeleuchtung getrennt ausgeführt von der Stromversorgung der Aufzugssteuerung 50 und des Antriebs (hier als Hauptenergiequelle bezeichnet). Die Verbindung zur Hauptenergiequelle erfolgt über einen Hauptschalter 18.1 und einen Anschluss 18. Die Stromsparmittel 11 umfassen, wie gezeigt, einen Mikroprozessor 30, der die verschiedensten Kriterien überwacht und das Managementkonzept umsetzt.

Bevor die Aufzugsanlage 10 in den Stand-by-Modus gebracht wird, muss, wie erwähnt, primär festgestellt werden, dass das Benutzungs-Kriterium nicht erfüllt ist, und sekundär, dass die Stand-by-Kriterien erfüllt sind.

Um festzustellen, ob das Benutzungs-Kriterium nicht erfüllt ist, wird üblicherweise überwacht, ob ein Kabinenlicht L1 eingeschaltet ist oder nicht. Das Kabinenlicht L1 ist normalerweise immer dann eingeschaltet, wenn ein Passagier in der Aufzugskabine 14 ist oder diese erst vor kurzem verlassen hat. Das Kabinenlicht L1 kann auch dann eingeschaltet sein, wenn die Aufzugskabine 14 auf einen Anforderungsruf von einer Station aus diese Station anfährt oder generell wenn die Aufzugskabine 14 in Bewegung ist.

Die Überwachung des Kabinenlichtes L1 kann mit Hilfe einer Erfassungsvorrichtung oder Sensorvorrichtung stattfinden, wobei diese zum Beispiel die Stromzufuhr 19 zum Kabinenlicht L1 erfasst bzw. überwacht. Das Kabinenlicht L1 kann auf verschiedene Weise eingeschaltet werden, insbesondere dann, wenn das Gewicht oder die Wärmeabgabe eines Passagiers in der Aufzugskabine 14 sensiert wird.

Wenn eine Aufzugsanlagen 10 ohne ein derartiges schaltbares Kabinenlicht mit der energiesparenden Vorrichtung nach der Erfindung nachgerüstet werden sollen, so muss die Nachrüstung auch ein solches Kabinenlichtsystem umfassen, was sich im Allgemeinen leicht durchführen lässt. Gegenüber permanent beleuchteten Aufzugskabinen 14 wird nur schon durch den Einbau eine solche vom Benutzungs-Kriterium bestimmte Kabinenbeleuchtung der Energiekonsum beträchtlich reduziert.

Die Erfassungsmittel zum Erfassen des Benutzungs-Kriteriums, genauer zum Erfassen ob das Benutzungs-Kriterium eingehalten ist, können auch dazu ausgebildet sein, die Helligkeit in einer Überwachungszone, insbesondere in der Aufzugskabine 14 zu detektieren und so den Aufzugs-Status festzustellen.

Wird, wie oben beschrieben, das Benutzungs-Kriterium mit Hilfe des Kabinenlichtes L1 überwacht, so erfolgt dies vorzugsweise, wie in Fig. 3 gezeigt, mittels Stromwandler 19.1, da oft das Relais des Kabinenlichtes L1 an der Aufzugskabine 14 angeordnet ist und somit vom Stromsparmittel 11 her nicht zugänglich ist.

Um die Aufzugsanlage 10 in den Stand-by-Modus zu bringen, wird für das dazu erforderliche Unterbrechen der (Haupt- )Energieversorgung vorzugsweise ein Schrittschalter 18.2 benutzt, da ein solcher nur während des Schaltvorganges Energie konsumiert. Wird statt eines Schrittschalters 18.2 eine herkömmliche Schützvorrichtung eingesetzt, so konsumiert ein solcher Schütz im Betrieb etliche 10W, also auch während des Stand-by.

Damit die Funktionalität der neuen Stromsparmittel 11 in einfacher Weise an gewisse spezielle Bedürfnisse angepasst und mit fortschreitender technischer Entwicklung erweitert oder verbessert werden kann, ist gemäss Fig. 3 ein Stecker 30.1, bzw. eine Schnittstelle zu einem Software-Update vorhanden. Diese Schnittstelle ist optional.

Es kann weiterhin eine Benutzer- Schnittstelle mit einer Ausgabeeinheit, zum Beispiel mit einer Visualisierungseinheit wie einem Display 30.2, und mit einer Eingabeeinheit, zum Beispiel mit einem Handy-Joystick 30.3, vorgesehen sein. Mit einer optionalen, zusätzlichen Speichereinheit und einer Uhr können auch Benutzungsprotokolle erstellt und Steuerschritte programmiert werden.

Die Vorrichtung gemäss Fig. 3 kann im Weiteren ein Input Output Steckersystem 30.4 umfassen. Dieses erlaubt das Aufwecken der Aufzugsanlage 10 aus dem Stand-by-Modus über externe Mittel. Einfache Möglichkeiten hierzu sind ein Schlüsselschaltersystem oder ein anderes Schliesssystem, beispielsweise mit einem Kartenleser, ferner dedizierte Aufwecktasten, Sensoren zur Detektion von benutzungswilligen Personen wie Infrarot oder RADAR, Signalempfänger für Signale von Gebäuden, oder eine zweite Schaltebene in den Bedienungselementen, das heisst zum Beispiel den Rufknöpfen oder Ruftastentasten (z.B. eines Biobus oder LOP Bussystems).

Über das Steckersystem 30.4 kann auch Spannung für den Anschluss weiterer Geräte geliefert werden. Insbesondere kann ein Frühwarn-Ausgang vorgesehen sein, um zu signalisieren, dass die Stromsparmittel 11 demnächst die Verbindung 18 zur Stromquelle abbrechen und die Aufzugsanlage 10 in den Stand-by-Modus gehen wird.

Ein weiterer Ausgang des Steckersystems 30.4 kann benutzt werden, um anzuzeigen, dass die im Stand-by-Modus befindliche Aufzugsanlage 10 aufgeweckt wurde und nächstens in den Operations-Modus gehen wird, sich somit in einem Warm-up-Zustand befindet. Hier können beispielsweise Displays bzw. Signallampen angeschlossen werden, deren Signale Geräte oder zukünftige Passagiere über den Zustand der Stromsparmittel 11 informieren.

An den Eingang des Steckersystems 30.4 können aufzugsspezifische oder produktspezifische Schnittstellen angeschlossen werden, mit deren Hilfe erweiterte Möglichkeiten, insbesondere im Zusammenhang mit speziellen Steuerintentionen, erschlossen werden, da oft das Anbringen zusätzlicher Tasten und Schalter auf den Tableaux 20.1, 20.2 der Etagen problematisch ist.

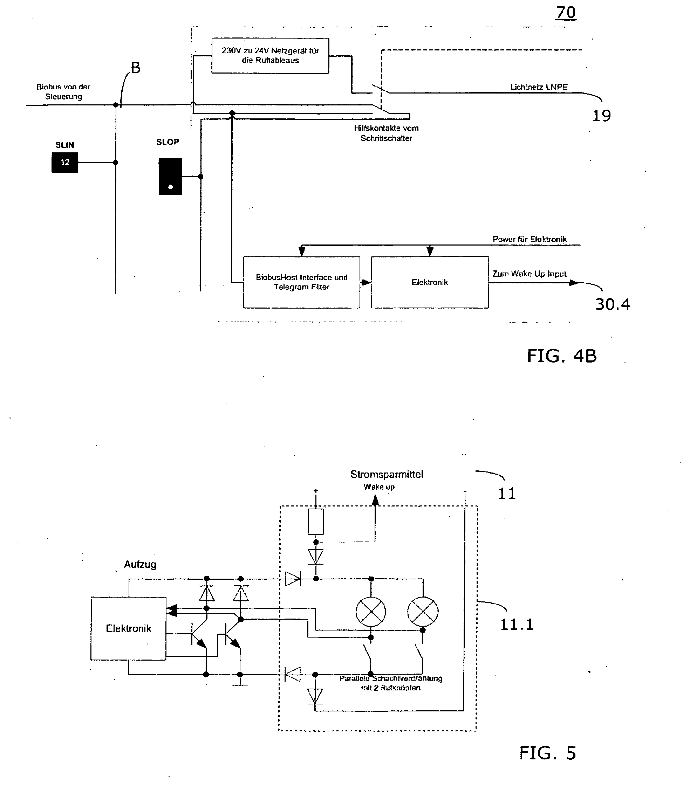

Fig. 4A zeigt ein spezielles LON Bussystem 60, um Signale zu erzeugen bzw. zu übermitteln, und Fig. 4B zeigt ein anderes spezifisches Bussystem 70 (ein Schindler Biobus) zum gleichen Zweck. Diese Bussysteme 60, 70 werden benutzt, wenn die Aufzugsanlage 10 im Stand-by-Modus ist. Dann ist die Verbindung 18 zur Hauptenergiequelle unterbrochen, die Tableaux 20.1, 20.2 bzw. Bedienungsknöpfe oder -tasten auf den Etagen müssen aber dennoch, z.B. durch die Hilfsenergiequelle, weiter aktionsfähig gehalten und hierzu mit Energie versorgt werden, da jederzeit ein benutzungswilliger Passagier eintreffen kann. Mit den Bussystemen 60, 70 werden die Tableaux 20.1, 20.2 betrieben, während die Aufzugsanlage 10 im Stand-by-Modus ist, bzw. schläft. Betätigt ein zukünftiger Passagier einen Rufknopf zum Rufen oder mit anderen Worten zum Anfordern der Aufzugskabine 14, so geht vom jeweiligen Tableau 20.1, 20.2 aus eine Mitteilung auf den Bus B. Diese Mitteilung wird von der Schnittstelle erkannt, worauf die Schnittstelle via Wake up Input die Vorrichtung nach der Erfindung, das heisst die Stromsparmittel 11, dazu bringt, die Aufzugsanlage 10 aufzuwecken, um sie in den Operations-Modus zu bringen. Um Energie zu sparen und/oder wegen limitierter Leistung des Netzteils der Schnittstelle müssen eventuell auf den Etagen die Displays von den Tableaux 20.1, 20.2 mit den Ruftasten getrennt werden.

Mit Bezug auf Fig. 2 wurde weiter oben die Verkabelung ausserhalb des Aufzugsschachtes 12 (Hausinstallation 20 genannt) erwähnt. Fig. 5 zeigt nun die Möglichkeit, die Vorrichtung 11 nach der Erfindung an eine parallele Schachtverkabelung anzuschliessen. Wird auf einer der Etagen ein Rufknopf betätigt, so hat dies eine Änderung der Spannung auf einem entsprechenden Leitungsdraht der Hausinstallation 20 zur Folge. Geht die Aufzugsanlage 10 über beispielsweise fünf Etagen, so müssen fünf Signale überwacht werden, damit im geeigneten Moment, nämlich wenn auf einer der fünf Etagen eine Aufzugskabine 14 angefordert wird, die Aufzugsanlage 10 aus dem Stand-by-Modus geweckt und in den Operations-Modus versetzt wird. Bei der Realisierung eines solchen Teils einer Aufzugsanlage 10 sollten die folgenden Punkte beachtet werden, von denen einige besonders relevant sind, wenn die Stromsparmittel 11 zur Nachrüstung einer bestehenden Aufzugsanlage 10 eingesetzt werden sollen.

Erstens wächst die Anzahl der zu überwachenden Signale und damit der Leitungsdrähte mit der Anzahl der Etagen bzw. der Anzahl der Ruftasten der Tableaux. Zwar kann mittels Dioden oder Transistoren aus der Vielzahl dieser Signale ein einziges Signal gewonnen werden, jedoch sind bei einer derartigen Anordnung der Verdrahtungsaufwand und die Störanfälligkeit gross.

Zweitens wären die eigentliche Aufzugsanlage 10 und die Vorrichtung nach der Erfindung, das heisst die Stromsparmittel 11, galvanisch verbunden. Ist die Aufzugsanlage 10 im Stand-by-Modus und die Verbindung 18 zur hauptsächlichen Energiequelle unterbrochen, so kann eine Rückspeisung vom Stromsparmittel 11 in die eigentliche Aufzugsanlage 10 erfolgen. Dies kann zu Fehlfunktionen führen.

Drittens sollte die Energieversorgung für Anzeigen von derjenigen der Rufknöpfe bzw. Ruftasten getrennt werden, was apparativ zu Komplikationen führt. Oft sind Rufknöpfe bzw. Ruftasten mit Anzeigen in Form von in sie integrierten Quittungslampen verbunden, so dass eine Trennung nicht möglich ist.

Viertens können Ausgleichsströme zwischen der Masse der Stromsparmittel 11 einerseits und des eigentlichen Aufzugssystems 10 anderseits fliessen. Für diesen Fall muss sichergestellt werden, dass die Stromsparmittel 11 keine Verbindung zur Masse haben.

Die oben genannten Probleme können mit einer (Ankopplungs-)Schaltung 11.1 gemäss Fig. 5 weitgehend vermieden werden.

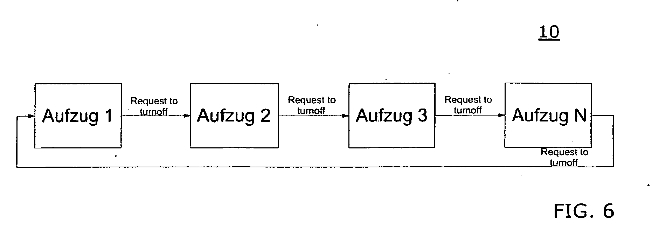

Es wurden bisher nur Aufzugsanlagen 20 erwähnt, die einen einzelnen Aufzugsschacht 12 enthalten. Es liegt aber auf der Hand, dass Massnahmen zur Reduktion des Energiekonsums bedeutend wirkungsvoller sind im Zusammenhang mit Aufzugsanlagen 10, die mehrere Aufzugsschächte 12 und/oder -kabinen 14 umfassen, wie beispielsweise in Fig. 6 gezeigt. Aufzugsanlagen 10 mit einer ganzen Gruppe von Aufzügen werden beispielsweise in Bürogebäuden, Kaufhäusern, Bahnhöfen oder Flughäfen eingesetzt. In den meisten Fällen ist die Belastung solcher Gruppen von Aufzügen zeitlich nicht kontinuierlich. Zum Beispiel werden in Bürogebäuden die Aufzüge zu Arbeitsbeginn und Arbeitsende stark, in den Zwischenzeiten wenig und nachts sowie an Wochenenden kaum benutzt. Die Stromsparmittel 11 der einzelnen Aufzüge lassen sich in verschiedener Weise verbinden, beispielsweise kreisförmig oder sternförmig oder vernetzt.

Es kann eine Anordnung gewählt werden, bei welcher jeder einzelne Aufzug ein Stromsparmittel 11 mit einem eigenen Mikroprozessor 30 aufweist, wie es weiter oben zum Beispiel mit Bezug auf Fig. 3 beschrieben ist, wobei einzelne Zusatzfunktionen für die Kommunikation mit anderen Stromsparmitteln 11 erforderlich sein können. Solche Anordnungen, in Kombination mit einer multilateralen Vernetzung, sind bezüglich ihrer Funktion optimal, aber apparativ aufwändig.

Alternativ können, wie schon erwähnt, Anordnungen mit anderer Verbindungskonfiguration und/oder mit nur einem einzigen (z.B. zentralen) Mikroprozessor 30 gewählt werden.

Bei einer kreisförmigen Verbindung, wie sie in Fig. 6 dargestellt ist, kann grundsätzlich jedes Stromsparmittel 11 mit den Stromsparmitteln 11 der unmittelbar benachbarten Aufzüge kommunizieren, wobei das Management letztlich für die Modi der Gesamtheit der einzelnen Aufzüge verantwortlich ist.

Besteht insgesamt ein geringer Bedarf an Transportleistung, so wird üblicherweise einer der Aufzüge während längerer Zeit nicht benutzt und verbleibt im Pausen-Zustand. Dieser Aufzug wird dann aber nicht sofort aus dem Operatios-Modus in den Stand-by-Modus versetzt, sondern es erfolgt eine Anfrage an den benachbarten Aufzug bzw. eine Bitte, sich in den Stand-by-Modus versetzen zu lassen. So lange eine genügende Anzahl der Aufzüge der Aufzugsanlage 10 im Operations-Modus verbleibt, wird der anfragende, nicht mehr belastete Aufzug in den Stand-by-Modus versetzt. Welcher Aufzug als letzter in den Stand-by-Modus versetzt wird, kann vom Zufall abhängen oder gesteuert werden. Sind beispielsweise die einzelnen Aufzüge der Aufzugsanlage 10 verschieden, indem sie verschiedene Grössen aufweisen oder selektiv unterschiedliche Etagen anfahren, so wird bestimmt, welcher Aufzug als letzter in den Stand-by-Modus geht, nämlich, bei Abwesenheit anderer Anforderungs-Kriterien, ein kleiner Aufzug, der alle Etagen anfährt. Wird während längerer Zeit kein Aufzug der Aufzugsanlage 10 benutzt, so wird auch der letzte aktive Aufzug in den Stand-by-Modus versetzt. Nimmt das Verkehrsaufkommen später wieder zu, so wird vorerst ein einzelner Aufzug in den Operations-Modus versetzt. Ist dieser Aufzug dann stark belastet, so entzieht er einem der anderen Aufzüge die Berechtigung, im Stand-by-Modus zu sein und veranlasst dadurch, dass dieser zweite Aufzug in den Operations-Modus geht. Sind dann beide Aufzüge zu stark belastet, so veranlassen sie, dass ein weiterer Aufzug in den Operations-Modus geht.

## Patentansprüche

1. Verfahren zum Vermindern des Energiekonsums einer Aufzugsanlage (10), die alternativ in einen Operations-Modus oder in einen Stand-by-Modus bringbar ist, wobei
- mit Erfassungsmitteln (19.1) ein Benutzungs-Kriterium erfasst wird,
- mit Modus-Veränderungsmitteln (11) die Aufzugsanlage (10)
o bei Nicht-Erfüllen des Benutzungs-Kriteriums und Erfüllen von Stand-by-Kriterien aus dem Operations-Modus in den Stand-by-Modus gebracht wird, und
o bei Nicht-Erfüllen der Stand-by-Kriterien aus dem Stand-by-Modus in den Operations-Modus gebracht wird.
**dadurch gekennzeichnet,**
**dass** zur Überwachung des Benutzungs-Kriteriums eine Stromzufuhr (19) zu einem Licht (L1) einer Aufzugskabine (14) überwacht wird, das beim Vorhandensein eines Passagiers in der Aufzugskabine (14) eingeschaltet bleibt, und dass, bei Erfüllen sowohl des Benutzungs-Kriteriums wie auch der Stand-By-Kriterien, das Benutzungs-Kriterium stets Vorrang gegenüber den Stand-By-Kriterien hat.

2. Verfahren nach Anspruch 1,
**dadurch gekennzeichnet,**
**dass** das Benutzungs-Kriterium mindestens dann erfüllt wird, wenn sich ein Passagier in einer Aufzugskabine (14) befindet und die Aufzugsanlage (10) somit im Operations-Modus bleibt.

3. Verfahren nach einem der vorangehencen Ansprüche,
**dadurch gekennzeichnet,**
**dass** mindestens ein Stand-by-Kriterium festgelegt wird, indem Umschaltzeiten und/oder Zeitspannen für den Stand-by-Modus bestimmt werden.

4. Verfahren nach Anspruch 3,
**dadurch gekennzeichnet,**
**dass** mindestens ein Teil der Stand-by-Kriterien durch eine programmierbare Schaltuhr festgelegt wird.

5. Verfahren nach Anspruch 3,
**dadurch gekennzeichnet,**
**dass** mindestens ein Teil der Stand-by-Kriterien durch externe Mittel, vorzugsweise über eine Schnittstelle (30.1, 30.4), festgelegt wird.

6. Verfahren nach einem der vorangehenden Ansprüche, **dadurch gekennzeichnet,**
**dass** im Stand-by-Modus ein Notstromspeicher aufgeladen wird.

7. Vorrichtung zum Vermindern des Energiekonsums einer Aufzugsanlage (10), die alternativ in einen Operations-Modus oder in einen Stand-by-Modus bringbar ist,
wobei die Vorrichtung aufweist:
- Erfassungsmittel (19.1), um ein Beautzungs-Kriterium zu erfassen, das den aktuellen Benutzungs-Status der Aufzugsanlage (10) beschreibt,
- Stromsparmittel (11) mit einem Microprozessor (30), um die Aufzugsanlage (10)
■ bei Nicht-Erfüllen des Benutzungs-Kriteriums und Erfüllen von Stand-by-Kriterien aus dem Operations-Modus in den Stand-by-Modus zu bringen, und
■ bei Nicht-Erfüllen der Stand-by-Kriterien aus dem Stand-by-Modus in den Operations-Modus zu bringen.
**dadurch gekennzeichnet,**
**dass** die Erfassungsmittel (19.1) zum Erfassen der Erfüllung des Benutzungs-Kriteriums Mittel zum Erfassen der Stromzufuhr zu einem Leuchtkörper (L1) einer Aufzugskabine (14) der Aufzugsanlage (10) aufweisen, wobei es sich vorzugsweise um einen Stromwandler handelt, und dass, bei Erfüllen sowohl des Benutzungs-Kriteriums wie auch der Stand-By-Kriterien, das Benutzungs-Kriterium stets Vorrang gegenüber den Stand-By-Kriterien hat.

8. Vorrichtung nach Anspruch 7,
**dadurch gekennzeichnet,**
**dass** zum Festlegen mindestens eines Teiles der Stand-by-Kriterien im Stromsparmittel (11) Mittel, beispielsweise eine programmierbare Schaltuhr, vorgesehen sind.

9. Vorrichtung nach einem der Ansprüche 7 oder 8,
**dadurch gekennzeichnet,**
**dass** zum Festlegen mindestens eines Teils der Stand-by-Kriterien externe Steuermittel vorgesehen sind, die über eine Schnittstelle (30.1) mit den Stromsparmitteln (11) verbunden sind.

10. Vorrichtung nach einem der Ansprüche 7 bis 9,
**dadurch gekennzeichnet,**
**dass** die Stromsparmittel (11) einen Schrittschalter (18.2) umfassen, um mindestens einen Teil der Aufzugsanlage (10) von der Hauptenergiequelle zu trennen.

11. Vorrichtung nach einem der Ansprüche 7 bis 10,
**dadurch gekennzeichnet,**
**dass** die Aufzugsanlage (10) mehrere Aufzüge aufweist und pro Aufzug ein Stromsparmittel (11) vorgesehen ist und die Stromsparmittel (11) zniteinander verbunden sind.

12. Vorrichtung nach einem der Ansprüche 7 bis 11,
**dadurch gekennzeichnet,**
**dass** die Aufzugsanlage (10) über mindestens ein Notstromspeicher verfügt, das im Stand-by-Modus der Aufzugsanlage (10) aufladbar ist.

13. Aufzugsanlage (10) mit einer Vorrichtung nach einem der Ansprüche 7 bis 12,
**dadurch gekennzeichnet,**
**dass**die Aufzugsanlage (10) im Stand-by-Modus mindestens teilweise von einer Hauptenergiequelle getrennt ist und nur noch Basisfunktionen der Aufzugsanlage (10) aufrecht erhalten werden, um ein späteres Eintreten in den Operations-Modus zu ermöglichen.

## Claims

1. Method of reducing the energy consumption of a lift installation (10) which can be alternatively brought into an operating mode or a standby mode, wherein
- a use criterion is detected by detecting means (19.1) and
- the lift installation (10) is brought by mode changing means (11)
- from the operating mode to the standby mode in the case of non-fulfilment of the use criterion and fulfilment of standby criteria and
- from the standby mode to the operating mode in the case of non-fulfilment of the standby criteria,
**characterised in that** for monitoring the use criterion a power feed (19) to a light (L1), which remains switched on in the case of presence of a passenger in the lift cage (14), of a lift cage (14) is monitored, and that when both the use criterion and the standby criteria are fulfilled the use criterion always has priority relative to the standby criteria.

2. Method according to claim 1, **characterised in that** the use criterion is fulfilled at least when a passenger is in a lift cage (14) and the lift installation (10) thus remains in operating mode.

3. Method according to one of the preceding claims, **characterised in that** at least one standby criterion is fixed **in that** switch-over times and/or time spans for the standby mode are determined.

4. Method according to claim 3, **characterised in that** at least a part of the standby criteria is fixed by a programmable time switch.

5. Method according to claim 3, **characterised in that** at least a part of the standby criteria is fixed by external means, preferably by way of an interface (30.1, 30.4).

6. Method according to any one of the preceding claims, **characterised in that** an emergency power store is charged in the standby mode.

7. Device for reducing the energy consumption of a lift installation (10) which can be alternatively brought into an operating mode or a standby mode, wherein the device comprises:
- detecting means (19.1) to detect a use criterion describing the current use status of the lift installation (10) and
- power-saving means (11) with a microprocessor (30) in order to bring the lift installation (10)
- from the operating mode to the standby mode in the case of non-fulfilment of the use criterion and fulfilment of standby criteria and
- from the standby mode to the operating mode in the case of non-fulfilment of the standby criteria,
**characterised in that** the detecting means (19.1) for detecting fulfilment of the use criterion comprise means for detecting the power feed to a lighting body (L1) of a lift cage (14) of the lift installation (10), the means preferably being a current converter, and that when both the use criterion and the standby criteria are fulfilled the use criterion always has priority relative to the standby criteria.

8. Device according to claim 7, **characterised in that** means, for example a programmable time switch, are provided in power-saving means (11) for fixing at least a part of the standby criteria.

9. Device according to one of claims 7 or 8, **characterised in that** external control means connectible by way of an interface (30.1) with the power-saving means (11) are provided for fixing at least a part of the standby criteria.

10. Device according to any one of claims 7 to 9, **characterised in that** the power-saving means (11) comprise a step switch (18.2) for separating at least a part of the lift installation (10) from the main energy source.

11. Device according to any one of claims 7 to 10, **characterised in that** the lift installation (10) comprises several lifts and a power-saving means (11) is provided per lift, the power saving means (11) being connected together.

12. Device according to any one of claims 7 to 11, **characterised in that** the lift installation (10) has at least one emergency power store which is chargeable in the standby mode of the lift installation (10).

13. Lift installation (10) with a device according to any one of claims 7 to 12, **characterised in that** the lift installation (10) in the standby mode is separated at least partly from a main energy source and only basic functions of the lift installation (10) are maintained so as to enable later entry into the operating mode.

## Revendications

1. Procédé pour réduire la consommation d'énergie d'une installation d'ascenseur (10) qui est apte à être amenée en alternance dans un mode de fonctionnement ou dans un mode d'attente, étant précisé
- qu'un critère d'utilisation est détecté à l'aide de moyens de détection (19.1),
- qu'à l'aide de moyens de modification de mode (11), l'installation d'ascenseur (10)
° est amenée du mode de fonctionnement au mode d'attente si le critère d'utilisation n'est pas satisfait et si des critères d'attente sont satisfaits, et
° est amenée du mode d'attente au mode de fonctionnement si les critères d'attente ne sont pas satisfaits,
**caractérisé en ce que** pour surveiller le critère d'utilisation, on surveille une amenée de courant (19) vers une lampe (L1) d'une cabine d'ascenseur (14) qui reste allumée en présence d'un passager dans la cabine (14), et **en ce que** si à la fois le critère d'utilisation et les critères d'attente sont satisfaits, le critère d'utilisation a toujours la priorité par rapport aux critères d'attente.

2. Procédé selon la revendication 1, **caractérisé en ce que** le critère d'utilisation est satisfait au moins si un passager se trouve dans une cabine d'ascenseur (14) et si l'installation d'ascenseur (10) reste ainsi en mode de fonctionnement.

3. Procédé selon l'une des revendications précédentes, **caractérisé en ce qu'**on fixe au moins un critère d'attente en définissant des temps de commutation et/ou des laps de temps pour le mode d'attente.

4. Procédé selon la revendication 3, **caractérisé en ce qu'**une partie au moins des critères d'attente sont fixés par une horloge programmable.

5. Procédé selon la revendication 3, **caractérisé en ce qu'**une partie au moins des critères d'attente sont fixés par des moyens externes, de préférence une interface (30.1, 30.4).

6. Procédé selon l'une des revendications précédentes, **caractérisé en ce qu'**en mode d'attente, un accumulateur de courant de secours est chargé.

7. Dispositif pour réduire la consommation d'énergie d'une installation d'ascenseur (10) qui est apte à être amenée en alternance dans un mode de fonctionnement ou dans un mode d'attente, le dispositif comprenant :
- des moyens de détection (19.1) pour détecter un critère d'utilisation qui décrit l'état d'utilisation actuel de l'installation d'ascenseur (10),
- des moyens d'économie de courant (11) avec un microprocesseur (30) pour
° amener l'installation d'ascenseur (10) du mode de fonctionnement au mode d'attente si le critère d'utilisation n'est pas satisfait et si des critères d'attente sont satisfaits, et
° amener l'installation d'ascenseur (10) du mode d'attente au mode de fonctionnement si les critères d'attente ne sont pas satisfaits,
**caractérisé en ce que** les moyens de détection (19.1) pour détecter si le critère d'utilisation est satisfait comportent des moyens pour détecter l'amenée de courant vers une lampe (L1) d'une cabine (14) de l'installation d'ascenseur (10), étant précisé qu'il s'agit de préférence d'un transformateur de courant, et **en ce que** si à la fois le critère d'utilisation et les critères d'attente sont satisfaits, le critère d'utilisation a toujours la priorité par rapport aux critères d'attente.

8. Dispositif selon la revendication 7, **caractérisé en ce que** pour fixer une partie au moins des critères d'attente, il est prévu dans le moyen d'économie de courant (11) des moyens comme par exemple une horloge programmable.

9. Dispositif selon l'une des revendications 7 ou 8, **caractérisé en ce que** pour fixer une partie au moins des critères d'attente, il est prévu des moyens de commande externes qui sont reliés par une interface (30.1 ) aux moyens d'économie de courant (11).

10. Dispositif selon l'une des revendications 7 à 9, **caractérisé en ce que** les moyens d'économie de courant (11) comprennent un commutateur pas à pas (18.2) pour séparer une partie au moins de l'installation d'ascenseur (10) de la source d'énergie principale.

11. Dispositif selon l'une des revendications 7 à 10, **caractérisé en ce que** l'installation d'ascenseur (10) comporte plusieurs ascenseurs, pour chaque ascenseur il est prévu un moyen d'économie de courant (11), et les moyens d'économie de courant (11) sont reliés entre eux.

12. Dispositif selon l'une des revendications 7 à 11, **caractérisé en ce que** l'installation d'ascenseur (10) dispose d'au moins un accumulateur de courant de secours qui est apte à être chargé pendant le mode d'attente de l'installation d'ascenseur (10).

13. Installation d'ascenseur (10) avec un dispositif selon l'une des revendications 7 à 12, **caractérisée en ce qu'**en mode d'attente (10), elle est séparée au moins en partie d'une source d'énergie principale et ne maintient plus que les fonctions de base de l'installation d'ascenseur (10) pour permettre un passage ultérieur en mode de fonctionnement.
